# EUROPEAN PATENT APPLICATION

(11) **EP 3 369 903 A1**
(43) Date of publication of application: **05.09.2018**
(21) Application number: 18159412.8
(22) Date of filing: 01.03.2018
(51) Int. Cl.: F01N 3/20

(54) **EXHAUST PASSAGE STRUCTURE FOR INTERNAL COMBUSTION ENGINE**

(30) Priority: 03.03.2017 JP 2017040428
(71) Applicant: Toyota Jidosha Kabushiki Kaisha, Toyota-shi, Aichi-ken, 471-8571 (JP)
(72) Inventor: KUBOTA, Hirofumi, Aichi-Ken, Aichi 471-8571 (JP); TSUNOOKA, Takashi, Aichi-Ken, Aichi 471-8571 (JP); HOSOYA, Takanobu, Aichi-Ken, Aichi 471-8571 (JP); MURATA, Hiroki, Aichi-Ken, Aichi 471-8571 (JP)
(74) Representative: D Young & Co LLP

(57) **Abstract**

An exhaust passage structure for an engine (1) includes an exhaust-gas catalyst (60), a bypass passage (502), a waste gate valve (503). The exhaust-gas catalyst (60) is disposed in the exhaust passage at downstream of the turbine of the turbocharger (5). The waste gate valve is disposed in an inlet of the bypass passage. The bypass passage includes a straight port portion disposed such that an axial line of at least a continuous portion including an outlet of the bypass passage is located on the same straight line, and an extended line of the axial line of the straight port portion intersects an upstream-side end surface of the exhaust-gas catalyst.

## Description

### BACKGROUND OF THE INVENTION

### 1. Field of the Invention

The present invention relates to an exhaust passage structure applied to an internal combustion engine including an exhaust turbine supercharger (a turbocharger) for driving a centrifugal compressor using exhaust gas energy, and particularly, to an exhaust passage structure including a bypass passage and a waste gate valve that are provided to a turbocharger.

### 2. Description of Related Art

As exhaust passages for internal combustion engines, there have been known structures in which turbines of turbochargers, bypass passages for allowing exhaust gases to flow while bypassing the turbines, and waste gate valves including valve bodies that open and close outlets of the bypass passages are arranged.

Japanese Patent Application Publication No. 2010-180781 (JP 2010-180781 A) discloses an internal combustion engine in which an exhaust-gas catalyst is arranged to an exhaust passage located more downstream than a turbine of a turbocharger, and in this arrangement of the internal combustion engine, most of an exhaust gas (hereinafter, referred to as a "bypass exhaust gas") flowing out from an outlet of the bypass passage directly collides against an upstream-side end surface of the exhaust-gas catalyst when a valve opening of a valve body of a waste gate valve is not less than a predetermined valve opening; and most of the bypass exhaust gas directly collides against an end wall surface of the exhaust passage located more upstream than the upstream-side end surface of the exhaust-gas catalyst when the valve opening of the valve body of the waste gate valve is less than the predetermined valve opening. JP 2010-180781 A discloses such a method that if warming-up of the exhaust-gas catalyst is required, as with the case in which the internal combustion engine is cold-started, the valve opening of the valve body of the waste gate valve is controlled to be not less than the predetermined valve opening so as to allow the bypass exhaust gas at a high temperature to directly collide against the exhaust-gas catalyst. JP 2010-180781 A also discloses such a method that if a temperature of the exhaust-gas catalyst might be excessively increased, as with the case in which the internal combustion engine is brought into a high-load driving, the valve opening of the valve body of the waste gate valve is controlled to be smaller than the predetermined valve opening so as to prevent the bypass exhaust gas at a high temperature from directly colliding against the exhaust-gas catalyst.

### SUMMARY OF THE INVENTION

Meanwhile, when a supercharging request is generated during the warming-up of the exhaust-gas catalyst, the valve opening of the waste gate valve might be changed to be smaller than the predetermined valve opening in order to increase the flow rate of the exhaust gas flowing via the turbine. In such a case, the bypass exhaust gas interferes with the waste gate valve, so that the directivity thereof deviates from the upstream-side end surface of the exhaust-gas catalyst; and consequently, it becomes difficult to bring the bypass exhaust gas at a high temperature to directly collide against the exhaust-gas catalyst.

The present invention provides a technique capable of maximizing amount of a bypass exhaust gas that can be brought to directly collide against an exhaust-gas catalyst by minimizing influence of a valve opening of a waste gate valve on a directivity of the bypass exhaust gas.

The present invention forms a bypass passage so as to allow an exhaust gas (a bypass exhaust gas) flowing out from an outlet of the bypass passage to flow in the direction toward an upstream-side end surface of an exhaust-gas catalyst, and arranges a waste gate valve to an inlet of the bypass passage so as to suppress change in directivity of the bypass exhaust gas due to influence of a valve opening of the waste gate valve, to thereby increase amount of the bypass exhaust gas directly colliding against the upstream-side end surface of the exhaust-gas catalyst as much as possible.

An aspect of the present invention provides an exhaust passage structure for an internal combustion engine. The exhaust passage structure includes a turbocharger, an exhaust-gas catalyst, a bypass passage, and a waste gate valve. The turbocharger includes a turbine disposed in an exhaust passage of the internal combustion engine, and a compressor disposed in an intake passage of the internal combustion engine. The exhaust-gas catalyst is disposed in the exhaust passage located at a position more downstream than the turbine of the turbocharger. The bypass passage is configured to bring an exhaust gas to flow from the exhaust passage located at a position more upstream than the turbine of the turbocharger, bypass the turbine, and flow to the exhaust passage located at a position more downstream than the turbine and more upstream than the exhaust-gas catalyst. The waste gate valve is configured to adjust an amount of gas flowing through the bypass passage. The waste gate valve is disposed in an inlet of the bypass passage. The bypass passage includes a straight port portion disposed such that an axial line of at least a continuous portion of the straight port portion including the outlet of the bypass passage is located on the same straight line. The bypass passage is arranged such that an extended line of the axial line of the straight port portion intersects an upstream-side end surface of the exhaust-gas catalyst.

In the above-configured exhaust passage structure for the internal combustion engine, in the case of requiring warming-up of the exhaust-gas catalyst as with the case in which the internal combustion engine is cold-started, when the waste gate valve is opened, at least part of the exhaust gas at a high temperature exhausted from the internal combustion engine flows via the bypass passage into the exhaust-gas catalyst. Heat of the exhaust gas, which flows via the bypass passage, is difficult to be transferred to the turbine, and thus the exhaust gas has a higher temperature than that of the exhaust gas flowing via the turbine. In this case, the bypass passage is arranged such that the extended line of the axial line of the straight port portion including the outlet of the bypass passage intersects the upstream-side end surface of the exhaust-gas catalyst; therefore, the exhaust gas flowing via the bypass passage (the bypass exhaust gas) tends to flow in the direction toward the upstream-side end surface (hereinafter, also referred to as a "upstream-side catalyst end surface") of the exhaust-gas catalyst. As a result, of the bypass exhaust gas, amount of the exhaust gas directly colliding against the upstream-side catalyst end surface without colliding against the wall surface of the exhaust passage, or the like, located more upstream than the upstream-side catalyst end surface becomes increased. Here, if the bypass exhaust gas collides against the exhaust passage wall surface or the like before the bypass exhaust gas reaches the upstream-side end surface, heat of the bypass exhaust gas is transferred to the passage wall surface, or the like; thus, quantity of heat transferred from the bypass exhaust gas to the exhaust-gas catalyst is likely to be reduced. Hence, of the bypass exhaust gas, amount of the exhaust gas colliding against the wall surface or the like before the exhaust gas reaches the upstream-side end surface becomes increased, it becomes difficult to efficiently transfer the heat of the bypass exhaust gas to the exhaust-gas catalyst. To the contrary, of the bypass exhaust gas, if the amount of the exhaust gas directly colliding against the upstream-side catalyst end surface becomes increased without colliding against the wall surface or the like, it is possible to efficiently transfer the heat of the bypass exhaust gas to the exhaust-gas catalyst. Accordingly, it is possible to promote the warming-up of the exhaust-gas catalyst. In addition, according to the exhaust passage structure for the internal combustion engine of the present invention, since the waste gate valve is disposed in the inlet of the bypass passage, the directivity of the bypass exhaust gas becomes difficult to be changed due to influence of the valve opening of the waste gate valve. Accordingly, it is possible to efficiently carry out the warming-up of the exhaust-gas catalyst, while suppressing the influence of the valve opening of the waste gate valve during the warming-up of the exhaust-gas catalyst.

The bypass passage may be arranged such that the extended line of the axial line of the straight port portion intersects a center of the upstream-side end surface of the exhaust-gas catalyst. In this case, the bypass exhaust gas might spread in the radial direction as it comes closer to the upstream-side catalyst end surface. At this time, if the bypass passage is arranged such that the extended line of the axial line of the straight port portion intersects the center of the upstream-side catalyst end surface, most of the exhaust gas is more likely to directly collide against the upstream-side catalyst end surface even if the bypass exhaust gas spreads in the radial direction before the bypass exhaust gas reaches the upstream-side catalyst end surface. As a result, it becomes possible to more efficiently transfer the heat of the bypass exhaust gas to the exhaust-gas catalyst. When the bypass passage is arranged such that the extended line of the axial line of the straight port portion intersects the center of the upstream-side catalyst end surface, the bypass passage may be disposed such that the axial line of the straight port portion and an axial line of the exhaust-gas catalyst are located on the same axis. In this case, it is possible to more securely increase the amount of the exhaust gas, in the bypass exhaust gas, directly colliding against the upstream-side catalyst end surface.

In light of maintaining the temperature of the exhaust gas flowing through the bypass passage to be a higher temperature, it is desirable to shorten the total length of the bypass passage. However, if the total length of the bypass passage is excessively short, the length of the straight port portion also becomes short in accordance with the shortened length, and thus the directivity of the bypass exhaust gas flowing out from the outlet of the bypass passage is likely to be deteriorated. If the directivity of the bypass exhaust gas becomes deteriorated, when the bypass exhaust gas collides against the exhaust gas flowing via the turbine (hereinafter, also referred to as a "turbine exhaust gas"), the directivity of the bypass exhaust gas might be changed, or amount of the exhaust gas separating from the flow of the bypass exhaust gas in the direction toward the upstream-side end surface becomes increased; and consequently, the amount of the bypass exhaust gas directly colliding against the upstream-side end surface might be decreased.

In the exhaust passage structure, the straight port portion may have a length that allows the exhaust gas flowing out from the outlet of the bypass passage to be directed to the upstream-side end surface of the exhaust-gas catalyst when a requested supercharging pressure for the turbocharger is not more than a predetermined supercharging pressure that is smaller than a maximum supercharging pressure. That is, the bypass passage according to the present invention may be formed such that the total length of the bypass passage may be set to be as short as possible under a condition that the length of the straight port portion is not less than a predetermined distance. The "predetermined distance" herein denotes a distance in which the bypass exhaust gas has a directivity that allows most of the bypass exhaust gas to directly collide against the upstream-side end surface even when the bypass exhaust gas collides against the turbine exhaust gas if the requested supercharging pressure for the turbocharger is not more than the predetermined supercharging pressure that is smaller than the maximum supercharging pressure, as with the case in which the internal combustion engine is brought into a moderate acceleration driving; and the distance is found based on results of experiments and simulations conducted in advance. According to the configuration, even when the internal combustion engine is brought into the moderate acceleration driving during the warming-up of the exhaust-gas catalyst, it is possible to allow most of the bypass exhaust gas to directly collide against the upstream-side end surface, and thus it is possible to efficiently carry out the warming-up of the exhaust-gas catalyst. When the requested supercharging pressure for the turbocharger is greater than the predetermined supercharging pressure, as with the case in which the internal combustion engine is brought into a sudden acceleration driving, the flow rate and the flow speed of the turbine exhaust gas become greater; thus it becomes difficult to allow the bypass exhaust gas to directly collide against the upstream-side end surface. However, when the internal combustion engine is brought into the sudden acceleration driving, a large amount of the exhaust gas at a high temperature is exhausted from the internal combustion engine, and in accordance with this, the temperature and the amount of the turbine exhaust gas also become higher and larger; thus it is possible to rapidly increase the temperature of the exhaust-gas catalyst without using the bypass exhaust gas. Hence, it is unnecessary to set the above predetermined distance to be long enough to guarantee the directivity of the bypass exhaust gas when the requested supercharging pressure for the turbocharger is greater than the predetermined supercharging pressure. Note that the "predetermined supercharging pressure" herein denotes, for example, a minimum value of a supercharging pressure supposed to secure an efficient warming-up of the exhaust-gas catalyst without allowing the bypass exhaust gas to directly collide against the upstream-side catalyst end surface, when the requested supercharging pressure for the turbocharger becomes greater than the predetermined supercharging pressure.

Here, the straight port portion may extend across the entire bypass passage. That is, the bypass passage may be formed such that the axial line of the bypass passage from the inlet to the outlet thereof is located on the same straight line. In this case, the bypass passage may be formed within a range in which the total length of the bypass passage is not less than the predetermined distance, and thus it becomes easier to shorten the total length of the bypass passage.

Here, the present inventors have enthusiastically conducted experiments and simulations; and as a result, the present inventors have found that in the configuration of providing the straight port portion extending across the entire bypass passage, if the above predetermined distance is set to be twice as long as the passage diameter of the exhaust passage at a position where the inlet of the bypass passage is provided, most of the bypass exhaust gas directly collides against the upstream-side end surface even when the internal combustion engine is brought into the moderate acceleration driving (the acceleration driving state in which the requested supercharging pressure is not more than the predetermined supercharging pressure). Accordingly, in the case in which the entire bypass passage is configured by the straight port portion, the bypass passage may have a total length no less than twice as long as the passage diameter of the exhaust passage at a position where the inlet of the bypass passage is provided.

In the exhaust passage structure, the outlet of the bypass passage may be connected to the exhaust passage such that the end surface of the outlet becomes a surface vertical to the axial line of the straight port portion. Here, if the outlet of the bypass passage is connected to the exhaust passage such that the outlet-side end surface of the bypass passage becomes a surface inclined relative to the axial line of the straight port portion, the exhaust gas, which flows from a region and its vicinity of the outlet-side end surface where an angle defined between the outlet-side end surface and the wall surface of the bypass passage is an obtuse angle, is likely to separate from the flow in the direction toward the center of the upstream-side end surface. Consequently, the amount of the bypass exhaust gas directly colliding against the upstream-side end surface is likely to be smaller. To the contrary, if the outlet of the bypass passage is connected to the exhaust passage such that the outlet-side end surface of the bypass passage becomes a surface vertical to the axial line of the straight port portion, of the bypass exhaust gas, the amount of the exhaust gas separating from the bypass exhaust gas in the direction toward the upstream-side end surface can be reduced as much as possible. As a result, it is possible to increase the amount of the bypass exhaust gas directly colliding against the outlet-side end surface as much as possible.

In the exhaust passage structure, the straight port portion may have a passage diameter that becomes smaller near the outlet of the bypass passage than near the inlet of the bypass passage. In this case, the straight port portion may be formed into a tapered shape such that the passage diameter of the straight port portion becomes gradually smaller from the inlet side toward the outlet side of the bypass passage, or the straight port portion may be formed to have a passage diameter that becomes smaller via a step in the middle of the straight port portion. By setting the passage diameter of the straight port portion to be continuously or stepwisely smaller from the inlet side to the outlet side of the bypass passage, it is possible to increase the density and the flow speed of the bypass exhaust gas, to thus enhance the directivity of the bypass exhaust gas. As a result, it is possible to securely increase the amount of the exhaust gas of the bypass exhaust gas, which directly collides against the upstream-side end surface.

According to the present invention, it is possible to reduce influence of the valve opening of the waste gate valve on the directivity of the bypass exhaust gas, to thus increase the amount of the bypass exhaust gas that can be brought to directly collide against the exhaust-gas catalyst as much as possible.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing a schematic configuration of an internal combustion engine to which the present invention is applied;
FIG. 2 is a sectional view of a turbine housing;
FIG. 3 is a view showing an example of a flow of a bypass exhaust gas;
FIG. 4 is a view showing, as a comparative example of a bypass passage according to the present embodiment, an example of configuring an outlet-side end surface of the bypass passage to be a surface inclined relative to an axial line of the bypass passage;
FIG. 5 is a view showing one example of a method of setting a length of the bypass passage;
FIG. 6 is a first view showing another embodiment of the bypass passage;
FIG. 7 is a second view showing another embodiment of the bypass passage; and
FIG. 8 is a third view showing another embodiment of the bypass passage.

### DETAILED DESCRIPTION OF EMBODIMENTS

Hereinafter, specific embodiments of the present invention will be described with reference to the drawings. The dimensions, materials, shapes, and relative arrangements, etc. of components that will be described in the present embodiments are not intended to limit the technical scope of the present invention only to them, unless particularly stated.

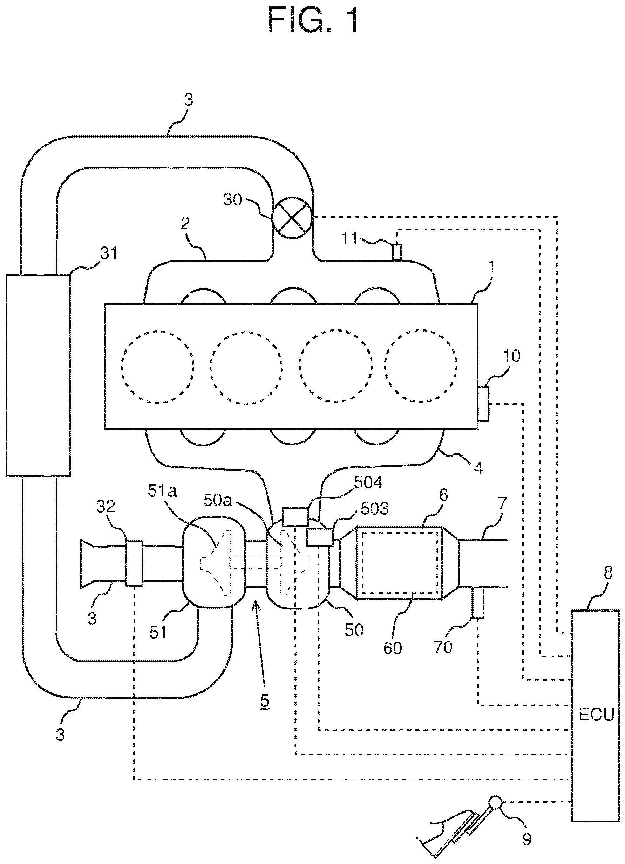

FIG. 1 is a view showing a schematic configuration of an internal combustion engine to which the present invention is applied. The internal combustion engine 1 shown in FIG. 1 is a compression-ignition type internal combustion engine (a diesel engine) or a spark-ignition type internal combustion engine (a gasoline engine).

The internal combustion engine 1 is connected to an intake pipe 3 via an intake manifold 2. In the middle of the intake pipe 3, there is disposed a throttle valve 30 adjusting a passage sectional area in an inside of the intake pipe 3. A compressor housing 51 of a turbocharger 5 is disposed in the intake pipe 3 located upstream of the throttle valve 30. An inter cooler 31 is disposed in the intake pipe 3 between the compressor housing 51 and the throttle valve 30.

The internal combustion engine 1 is connected to a turbine housing 50 of the turbocharger 5 via an exhaust manifold 4. The turbine housing 50 is connected to an exhaust pipe 7 via a catalytic casing 6. The catalytic casing 6 accommodates an exhaust-gas catalyst (such as a three-way catalyst and an oxidation catalyst, for example) 60 for removing at least one of hydrocarbon (HC), carbon monoxide (CO), and nitrogen oxide (NOx) contained in an exhaust gas.

Here, the turbocharger 5 is configured to integrally couple a turbine 50a rotatably accommodated in the turbine housing 50 and a compressor 51a rotatably accommodated in the compressor housing 51. The turbocharger 5 configured in this manner compresses an intake gas by using a rotation force of the turbine 50a rotationally driven by an exhaust gas energy to rotate the compressor 51a. The intake gas compressed by the compressor 51a and heated up to a high temperature is cooled through heat exchange with an outside air or a coolant in the inter cooler 31.

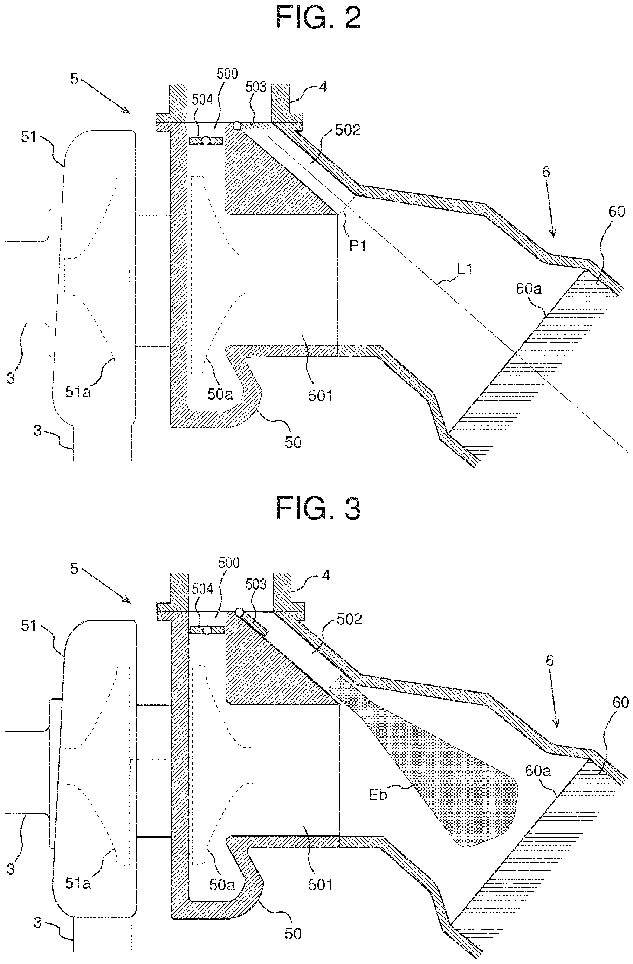

As shown in FIG. 2, the turbine housing 50 includes: a turbine inlet 500 for conducting an exhaust gas flowing out from the exhaust manifold 4 to the turbine 50a; and a turbine outlet 501 for exhausting the exhaust gas after flowing via the turbine 50a toward the catalytic casing 6. The turbine housing 50 is provided with a bypass passage 502 that allows the exhaust air flowing out from the exhaust manifold 4 to bypass the turbine inlet 500, the turbine 50a, and the turbine outlet 501, and then to be exhausted toward the catalytic casing 6. The bypass passage 502 is formed such that an axial line thereof is located on the same straight line from an inlet to an outlet of the bypass passage 502. That is, the bypass passage of the present embodiment is formed such that a straight port portion extends across the entire bypass passage. In addition, it is configured that the bypass passage 502 is arranged such that an extended line (a one-dot chain line L1 in FIG. 2) of the axial line of the bypass passage 502 intersects an upstream-side end surface 60a (hereinafter, referred to as an "upstream-side catalyst end surface 60a") of the exhaust-gas catalyst 60.

The turbine housing 50 includes a waste gate valve 503 (hereinafter, referred to as a "WGV 503") attached to the inlet of the bypass passage 502 so as to change an opening area of the inlet, and a turbo-bypass valve 504 (hereinafter, referred to as a "TBV 504") attached to the turbine inlet 500 so as to carry out switching between conduction and shut-off of electricity for the turbine inlet 500. The WGV 503 and the TBV 504 are electrically controlled by an ECU 8 described later.

When the WGV 503 is in a full valve closed state, and the TBV 504 is in a valve open state, a substantially total amount of the exhaust gas exhausted from the exhaust manifold 4 flows into the turbine inlet 500, and then flows via the turbine 50a, and thereafter is exhausted from the turbine outlet 501. When both the WGV 503 and the TBV 504 are in the valve open states, part of the exhaust gas exhausted from the exhaust manifold 4 flows via the turbine inlet 500, the turbine 50a, and the turbine outlet 501, and the rest of the exhaust gas flows via the bypass passage 502. That is, part of the exhaust gas exhausted from the exhaust manifold 4 bypasses the turbine 50a, and then flows into the catalytic casing 6. At this time, the flow rate of the exhaust gas flowing via the bypass passage 502 is adjusted by changing the valve opening of the WGV 503. When the WGV 503 is in the valve open state, and the TBV 504 is in the valve closed state, substantially total amount of the exhaust gas exhausted from the exhaust manifold 4 flows via the bypass passage 502 into the catalytic casing 6. That is, the substantially total amount of the exhaust gas exhausted from the exhaust manifold bypasses the turbine 50a to flow into the catalytic casing 6.

With reference to FIG. 1 again, an ECU (electronic control unit) 8 is provided along with the above-configured internal combustion engine 1. The ECU 8 is composed by a CPU, a ROM, a RAM, a backup RAM, and others. The ECU 8 is electrically connected to respective sensors of an accelerator position sensor 9, a crank position sensor 10, an intake pressure sensor 11, an air flow meter 32, and an exhaust gas temperature sensor 70, and others. The accelerator position sensor 9 outputs an electric signal in correlation with amount of accelerator operation (accelerator operation amount). The crank position sensor 10 outputs an electric signal in correlation with a rotational position of a not-illustrated crankshaft. The intake pressure sensor 11 is fixed to the intake manifold 2, and outputs an electric signal in correlation with the intake pressure (a supercharging pressure) in the intake manifold 2. The air flow meter 32 is fixed to the intake pipe 3 located more upstream than the compressor housing 51, and outputs an electric signal in correlation with mass of an intake gas flowing through the inside of the intake pipe 3. The exhaust gas temperature sensor 70 is fixed to a vicinity of the catalytic casing 6 in the exhaust pipe 7, and outputs an electric signal in correlation with the temperature of the exhaust gas flowing out from the catalytic casing 6.

The ECU 8 is electrically connected to various devices such as fuel injection valves of the internal combustion engine 1 and others, in addition to the above-described throttle valve 30, WGV 503, and TBV 504; and the ECU 8 controls the various devices based on the output signals of the above-described various sensors. For example, during the operation of the internal combustion engine 1, when the exhaust-gas catalyst 60 is not required to be warmed up, or the like, the ECU 8 maintains the TBV 504 to be in the valve open state. Then, the ECU 8 calculates a target supercharging pressure using an engine rotation speed calculated based on the output signal of the crank position sensor 10, and the output signal (the accelerator operation amount) of the accelerator position sensor 9, as parameter. Subsequently, if a supercharging pressure detected by the intake pressure sensor 11 is smaller than the target supercharging pressure, the ECU 8 changes the valve opening of the WGV 503 to be smaller than a current valve opening, and if a supercharging pressure detected by the intake pressure sensor 11 is greater than the target supercharging pressure, the ECU 8 changes the valve opening of the WGV 503 to be greater than the current valve opening. Specifically, if the supercharging pressure detected by the intake pressure sensor 11 is smaller than the target supercharging pressure, the ECU 8 changes the valve opening of the WGV 503 to be smaller as a difference between the detected supercharging pressure and the target supercharging pressure becomes greater, to thereby increase amount of the exhaust gas flowing into the turbine 50a. On the other hand, if the supercharging pressure detected by the intake pressure sensor 11 is greater than the target supercharging pressure, the ECU 8 changes the valve opening of the WGV 503 to be greater as the difference between the detected supercharging pressure and the target supercharging pressure becomes greater, to thereby reduce the amount of the exhaust gas flowing into the turbine 50a.

During an idling driving immediately after the internal combustion engine 1 is cold-started, the ECU 8 controls the TBV 504 to be closed, and also controls the WGV 503 to be fully opened, to thereby promote warming-up of the exhaust-gas catalyst 60. When the TBV 504 is closed and the WGV 503 is fully opened, a substantially total amount of the exhaust gas exhausted from the exhaust manifold 4 flows via the bypass passage 502 into the catalytic casing 6. In this condition, when the temperature of the turbine 50a is low, as with the case immediately after the internal combustion engine 1 is cold-started, and the exhaust gas exhausted from the exhaust manifold 4 flows via the turbine 50a, quantity of heat to be transferred from the exhaust gas to the turbine 50a becomes increased. Hence, the temperature of the turbine exhaust gas at the time when the exhaust gas flowing via the turbine 50a (the turbine exhaust gas) flows into the catalytic casing 6 becomes lower. Consequently, it might be difficult to efficiently carry out warming-up of the exhaust-gas catalyst 60. To the contrary, as described above, if the substantially total amount of the exhaust gas exhausted from the exhaust manifold 4 flows via the bypass passage 502 into the exhaust-gas catalyst 60, heat of the exhaust gas becomes difficult to be transferred to the turbine 50a, and thus the exhaust gas having a high temperature flows into the catalytic casing 6.

As described in the description of FIG. 2, the bypass passage 502 in the present embodiment is configured to extend in a straight line such that the extended line of the axial line of the bypass passage 502 intersects the upstream-side catalyst end surface 60a of the exhaust-gas catalyst 60; therefore, the exhaust gas (the bypass exhaust gas) flowing out from the outlet of the bypass passage 502 flows in the direction toward the upstream-side catalyst end surface 60a. Accordingly, of the bypass exhaust gas, amount of the exhaust gas that directly collides against the upstream-side catalyst end surface 60a can be increased. Here, before the bypass exhaust gas reaches the upstream-side catalyst end surface 60a, when the bypass exhaust gas collides against a passage wall surface (such as a wall surface of a cone portion of the catalytic casing 6, for example), heat of the bypass exhaust gas is transferred to the passage wall surface. Consequently, if amount of the exhaust gas of the bypass exhaust gas, directly colliding against the passage wall surface becomes increased before the bypass exhaust gas reaches the upstream-side catalyst end surface 60a, it becomes difficult to efficiently transfer heat of the bypass exhaust gas to the exhaust-gas catalyst 60. On the other hand, if the amount of the exhaust gas of the bypass exhaust gas, directly colliding against the upstream-side catalyst end surface 60a becomes increased, the quantity of heat transferred from the bypass exhaust gas to the exhaust-gas catalyst 60 becomes increased, to thus efficiently carry out the warming-up of the exhaust-gas catalyst 60.

As shown in FIG. 3, the bypass exhaust gas (Eb in FIG. 3) might spread in the radial direction as the bypass exhaust gas comes closer to the upstream-side catalyst end surface 60a. Taking account of such a possibility, it is desirable to arrange the bypass passage 502 in such a manner that the extended line of its axial line intersects a center of the upstream-side catalyst end surface 60a. With such an arrangement, even if the bypass exhaust gas spreads in the radial direction as the bypass exhaust gas comes closer to the upstream-side catalyst end surface 60a, most of the bypass exhaust gas is more likely to directly collide against the upstream-side catalyst end surface 60a. As shown in the above FIG. 2, the bypass passage 502 may be arranged such that the axial line of the bypass passage 502 and the axial line of the exhaust-gas catalyst 60 are arranged on the same straight line (in other words, coaxially arranged to each other). In this case, of the bypass exhaust gas, the amount of the exhaust gas directly colliding against the upstream-side catalyst end surface 60a can securely be increased.

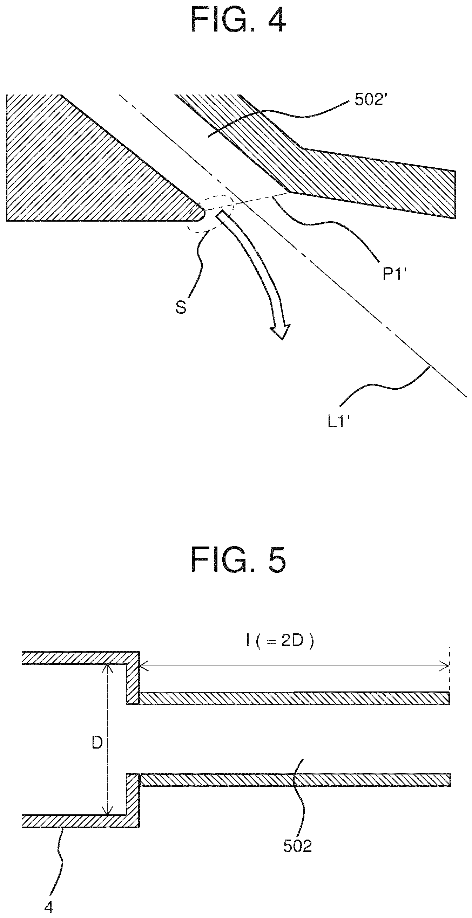

In addition, it is desirable to configure the bypass passage 502 such that an end surface on the outlet side (a surface P1 indicated by a two-dot chain line in FIG. 2) of the bypass passage 502 becomes a surface vertical to the axial line of the bypass passage 502. Here, as a comparative example of the bypass passage 502 according to the present embodiment, FIG. 4 is a view showing an example of configuring the outlet-side end surface of the bypass passage to be a surface inclined relative to the axial line of the bypass passage. That is, in the comparative example shown in FIG. 4, a bypass passage 502' is configured such that the outlet-side end surface P1' of the bypass passage 502' becomes a surface inclined relative to an axial line L1' of the bypass passage 502'. With such a configuration, the exhaust gas, which flows from a region and its vicinity (a region indicated by S in FIG. 4) of the outlet-side end surface P1' where an angle defined between the outlet-side end surface P1' and the wall surface of the bypass passage 502' is an obtuse angle, is likely to separate downward in FIG. 4, as indicated by an arrow in the FIG. 4. Hence, the amount of the bypass exhaust gas directly colliding against the upstream-side catalyst end surface 60a of the exhaust-gas catalyst 60 is likely to be smaller. To the contrary, as shown in FIG. 2, the bypass passage 502 is configured such that the outlet-side end surface P1 of the bypass passage 502 becomes a surface vertical to the axial line of the bypass passage 502; of the bypass exhaust gas, the amount of the exhaust gas separating from the flow of the bypass exhaust gas in the direction toward the upstream-side catalyst end surface 60a can securely be reduced. As a result, it is possible to securely increase the amount of the bypass exhaust gas directly colliding against the upstream-side end surface.

By the way, during the warming-up of the exhaust-gas catalyst 60, when the state of the internal combustion engine 1 shifts from an idling driving state to an acceleration driving state, and thus a supercharging request on the turbocharger 5 is generated, the TBV 504 is opened by the ECU 8, and the valve opening of the WGV 503 is also reduced. At this time, if the WGV is arranged at the outlet of the bypass passage, the bypass exhaust gas interferes with the WGV; consequently, the directivity of the bypass passage might be changed. To the contrary, since the WGV 503 of the present embodiment is arranged at the inlet of the bypass passage 502, change in directivity due to the change of the valve opening of the WGV 503 can be suppressed. This means that influence of the valve opening of the WGV 503 on the directivity of the bypass exhaust gas can be as small as possible.

As aforementioned, when the TBV 504 is opened while the exhaust-gas catalyst 60 is being warmed up, part of the exhaust gas exhausted from the exhaust manifold 4 flows via the turbine 50a. Hence, before the bypass exhaust gas reaches the upstream-side catalyst end surface 60a, the bypass exhaust gas might collide against the turbine exhaust gas. If the bypass exhaust gas collides against the turbine exhaust gas in this manner, the directivity of the bypass exhaust gas might deviate from the upstream-side catalyst end surface 60a, or more amount of the exhaust gas might separate from the flow of the bypass exhaust gas in the direction toward the upstream-side catalyst end surface 60a; consequently, the amount of the bypass exhaust gas directly colliding against the upstream-side catalyst end surface 60a might become decreased.

To cope with the above possibility, it can be considered that the length of the bypass passage 502 is set to be as long as possible, to thereby promote the directivity of the bypass exhaust gas. However, if the length of the bypass passage 502 becomes excessively long, quantity of heat radiating from the exhaust gas while the exhaust gas is flowing through the bypass passage 502 is likely to be greater. Hence, in light of maintaining the temperature of the exhaust gas flowing via the bypass passage 502 to be a high temperature, it is desirable to set the length of the bypass passage 502 to be as short as possible.

Therefore, in the present embodiment, within a range in which the directivity of the bypass exhaust gas can be guaranteed when the target supercharging pressure is relatively small, as with the case in which the state of the internal combustion engine 1 shifts from the idling driving state to a moderate-acceleration driving state, it is configured to set the length of the bypass passage 502 to be as short as possible. This is because of the following two reasons. When the target supercharging pressure is relatively great, as with the case in which the state of the internal combustion engine 1 shifts from the idling driving state to a sudden acceleration driving state, the flow rate and the flow speed of the turbine exhaust gas become greater; therefore, it becomes difficult to allow the bypass exhaust gas to collide against the upstream-side catalyst end surface 60a. In addition to this, a large amount of the exhaust gas at a high temperature is exhausted from the internal combustion engine 1, so that the amount and the temperature of the turbine exhaust gas also become greater; accordingly, it is possible to rapidly increase the temperature of the exhaust-gas catalyst 60 without using the bypass exhaust gas. That is, it is unnecessary to set the length of the bypass passage 502 to be long enough to guarantee the directivity of the bypass exhaust gas when the requested supercharging pressure for the turbocharger 5 becomes relatively great. Hence, in the present embodiment, the length of the bypass passage 502 is set such that the bypass exhaust gas has a sufficient directivity for allowing most of the bypass exhaust gas to directly collide against the upstream-side catalyst end surface 60a when the target supercharging pressure is not more than a predetermined supercharging pressure. The "predetermined supercharging pressure" herein denotes that a minimum value of a supercharging pressure that guarantees an efficient warming-up of the exhaust-gas catalyst 60 without allowing the bypass exhaust gas to directly collide against the upstream-side catalyst end surface 60a, if the target supercharging pressure becomes greater than the predetermined supercharging pressure. If the length of the bypass passage 502 is set in this manner, when a supercharging request for the turbocharger 5 is generated within a range in which the target supercharging pressure becomes not more than the predetermined supercharging pressure, as with the case in which during the warming-up of the exhaust-gas catalyst 60, the state of the internal combustion engine 1 shifts from the idling driving state to the moderate acceleration driving state, most of the bypass exhaust gas is allowed to directly collide against the upstream-side catalyst end surface 60a even if the bypass exhaust gas collides against the turbine exhaust gas. A lower limit value of the length of the bypass passage 502 that satisfies the above condition may be exemplified by a length 1 which is twice as long as a passage diameter D of the exhaust manifold 4 at a position where the inlet of the bypass passage 502 is provided, as shown in FIG. 5.

According to the aforementioned embodiment, even when the valve opening of the WGV 503 is changed, as with the case in which the state of the internal combustion engine 1 shifts from the idling driving state to the moderate acceleration driving state during the warming-up of the exhaust-gas catalyst 60, it is possible to allow the bypass exhaust gas at a high temperature to directly collide against the upstream-side catalyst end surface 60a. As a result, it is possible to efficiently carry out the warming-up of the exhaust-gas catalyst 60 when the internal combustion engine 1 is not only in the moderate acceleration state, but also in the idling driving state.

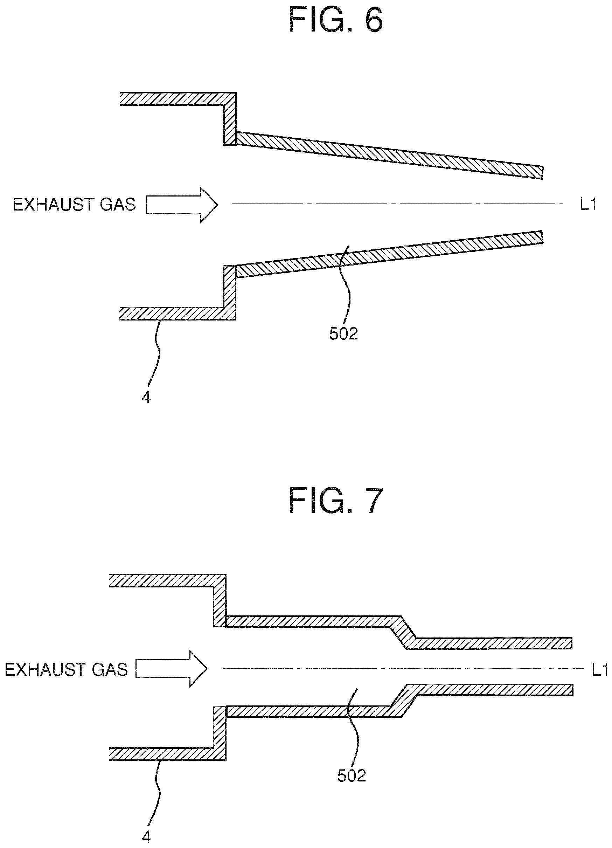

<Other embodiments> In the aforementioned embodiment, the example of the bypass passage 502 whose passage diameter is constant from the inlet to the outlet of the bypass passage 502 has been described, but the bypass passage 502 may be so formed as to have a passage diameter that becomes smaller near the outlet thereof than near the inlet thereof. In this case, for example, as shown in FIG. 6, the bypass passage 502 may be formed into such a tapered shape that the passage diameter of the bypass passage 502 becomes gradually smaller from the inlet side toward the outlet side. An arrow in FIG. 6 indicates a flow direction of the exhaust gas. As shown in FIG. 7, the bypass passage 502 may be formed such that the passage diameter of the bypass passage 502 becomes smaller via a step in the middle between the inlet and the outlet of the bypass passage 502. In this manner, by setting the passage diameter of the bypass passage 502 to be continuously or stepwisely smaller from the inlet side to the outlet side, it is possible to increase the density and the flow speed of the bypass exhaust gas, to thus enhance the directivity of the bypass exhaust gas. As a result, it is possible to securely increase the amount of the exhaust gas of the bypass exhaust gas, which directly collides against the upstream-side catalyst end surface 60a.

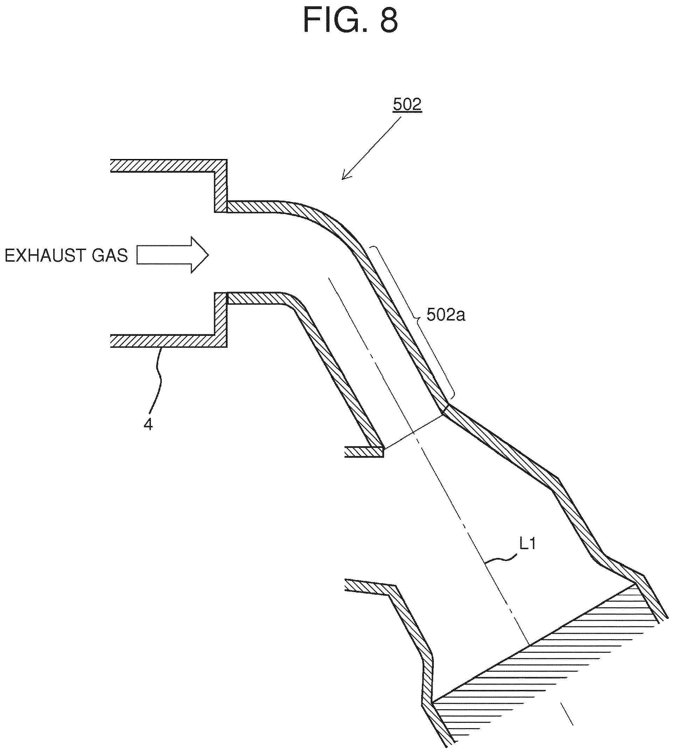

In the aforementioned embodiment, there has been described the example that the bypass passage 502 is formed such that the axial line from the inlet to the outlet of the bypass passage 502 is arranged on the same straight line (that is, the example of forming the bypass passage 502 such that a straight port portion extends across the entire bypass passage). However, the bypass passage 502 may be formed such that a continuous portion including the outlet of the bypass passage 502 is composed by the straight port portion. For example, as shown in FIG. 8, the bypass passage 502 may be formed to be bent in the middle of the bypass passage 502. In this case, a portion 502a extending from the middle to the outlet of the bypass passage 502 is formed as the straight port portion whose axial line is located on the same straight line, and the extended line L1 of the axial line of the portion 502a intersects the center of the upstream-side catalyst end surface 60a of the exhaust-gas catalyst 60. In addition, the length of the portion 502a is set such that the bypass exhaust gas has a sufficient directivity for allowing most of the bypass exhaust gas to directly collide against the upstream-side catalyst end surface 60a when the target supercharging pressure is not more than the predetermined supercharging pressure.

## Claims

1. An exhaust passage structure for an internal combustion engine (1), the exhaust passage structure comprising:
a turbocharger (5) including a turbine disposed in an exhaust passage of the internal combustion engine (1), and a compressor disposed in an intake passage of the internal combustion engine (1);
an exhaust-gas catalyst (60) disposed in the exhaust passage located at a position more downstream than the turbine of the turbocharger (5);
a bypass passage (502) configured to bring an exhaust gas to flow from the exhaust passage located at a position more upstream than the turbine of the turbocharger (5), bypass the turbine, and flow to the exhaust passage located at a position more downstream than the turbine and more upstream than the exhaust-gas catalyst (60); and
a waste gate valve (503) configured to adjust an amount of gas flowing through the bypass passage (502),
wherein the waste gate valve (503) is disposed in an inlet of the bypass passage (502), and
the bypass passage (502) includes a straight port portion disposed such that an axial line of at least a continuous portion of the straight port portion including an outlet of the bypass passage (502) is located on the same straight line, and
the bypass passage (502) is arranged such that an extended line of the axial line of the straight port portion intersects an upstream-side end surface of the exhaust-gas catalyst (60).

2. The exhaust passage structure for the internal combustion engine (1) according to claim 1, wherein
the bypass passage (502) is disposed such that the extended line of the axial line of the straight port portion intersects a center of the upstream-side end surface of the exhaust-gas catalyst (60).

3. The exhaust passage structure for the internal combustion engine (1) according to claim 2, wherein
the bypass passage (502) is disposed such that the axial line of the straight port portion and an axial line of the exhaust-gas catalyst (60) are located on the same axis.

4. The exhaust passage structure for the internal combustion engine (1) according to any one of claims 1 to 3, wherein
the straight port portion has a length that allows the exhaust gas flowing out from the outlet of the bypass passage (502) to be directed to the upstream-side end surface of the exhaust-gas catalyst (60) when a requested supercharging pressure for the turbocharger (5) is not more than a predetermined supercharging pressure that is smaller than a maximum supercharging pressure.

5. The exhaust passage structure for the internal combustion engine (1) according to claim 4, wherein the straight port portion extends across the entire bypass passage (502).

6. The exhaust passage structure for the internal combustion engine (1) according to claim 5, wherein the bypass passage (502) has a total length no less than twice as long as a passage diameter of the exhaust passage at a position where the inlet of the bypass passage (502) is provided.

7. The exhaust passage structure for the internal combustion engine (1) according to any one of claims 1 to 6, wherein the outlet of the bypass passage (502) is connected to the exhaust passage such that an end surface of the outlet becomes a surface vertical to the axial line of the straight port portion.

8. The exhaust passage structure for the internal combustion engine (1) according to any one of claims 1 to 6, wherein the straight port portion has a passage diameter that becomes smaller near the outlet of the bypass passage (502) than near the inlet of the bypass passage (502).
